Europäisches Patentamt

European Patent Office

Office européen des brevets

(19)

(11) Publication number: **0 055 979**

**A1**

# (12) EUROPEAN PATENT APPLICATION

(21) Application number: **81850201.5**

(22) Date of filing: **29.10.81**

(51) Int. Cl.³: **F 16 K 24/04**

(30) Priority: **07.01.81 NO 810040**

(43) Date of publication of application:
**14.07.82 Bulletin 82/28**

(84) Designated Contracting States:
**AT CH DE LI SE**

(71) Applicant: **TA-ESCO A/S**
**P.O. Box 85**
**N-3601 Kongsberg(NO)**

(72) Inventor: **Dambo, Ulf G.**

**N-3600 Kongsberg(NO)**

(74) Representative: **ROSTOVANYI, Peter et al,**
**AWAPATENT AB Box 5117**
**S-200 71 Malmö(SE)**

(54) Venting valve for sewage and the like.

(57) Venting valve for water, sewage and the like under pressure, comprising a housing (1) with a float (2) adapted to be lifted by the water, sewage and the like, and a valve (5,6) for the escape of air, and adapted to be closed in response to movement of the float to an upper position. With such venting valves safe functioning can be a problem, in particular a good sealing must be secured when it is desired that the valve shall be closed. A pressure channel (10) is at one end adapted to be subjected to the air pressure in the space (11) between the liquid surface (A) and the valve (5,6), and is at the other end (9) adapted to exert a force seeking to open the valve (5,6). Further, a control valve (19) is arranged at said one end of the channel (10), and the control valve (19) has an actuating member (19a) which follows the movements of the float (2), whereas a valve member (5) of the valve (5,6) is adapted to have a certain backlash (20) with respect to the float movement, so that the control valve (19) is opened before the valve (5,6) when the float (2) is descending.

EP 0 055 979 A1

In liquid conduits found in municipal and other systems, in particular sewers, in which the liquid, for example water or sewage, is transported by means of pumps, there will often be formed air cushions at the highest points along the length of the conduit, and such air cushions normally have to be vented. It is obvious that such necessary venting must not let any liquid leak out from the conduit, which is particularly easy to understand when sewage is concerned.

There are previously known venting valves for water, sewage and the like under pressure, comprising a housing with a float adapted to be lifted by the water, the sewage and the like, and a valve for the escape of air and adapted to be closed in response to movement of the float to an upper position. However, there is a serious problem in known designs, consisting therein that the valve can easily become dirty or clogged so that it does not function as intended. This is specifically the case when the liquid flowing in the conduit concerned, contains polluting matter, such as for example sewage. A more substantial problem which is in part accentuated when polluted liquid is present, consists therein that sometimes there is generated an elevated pressure in the air cushion above the liquid or sewage surface. This pressure contributes to maintain the valve closed in situations where it should be open for the escape of air. In other words the force exerted by this elevated pressure will more than balance the weight of the float and the parts moving together therewith.

In Norwegian Patent Specification No. 142,457 there is given a solution to the above problems, which is obtained in the first place thereby that a venting valve as stated above, is provided with a pressure medium channel which at one end through a movable sealing element is subjected to the air pressure in the space between the water or sewage surface and the valve, and which at the other end is adapted to exert a force seeking to open the valve.

This known solution results in the forming of a closed system for pressurised air balancing, which has the effect that the valve is not maintained in a closed position by the elevated pressure in the air inside the valve housing, i.e. the pressure difference between the ambient atmospheric pressure and the elevated pressure in the valve housing.

The present invention represents a further development of the above venting valve, and is based upon similar principles. An important reason for this further development consists therein that the earlier solution did not in all situations prove to be completely safe in its function, at the same time as the design with a membrane has been somewhat problematic, in particular with respect to the choice of membrane material.

Thus, according to the present invention a venting valve for water, sewage and the like under pressure, comprising a housing with a float adapted to be lifted by the water, sewage or the like, and a valve for the escape of air, and adapted to be closed in response to movement of the float to an upper position, and a pressure channel which at one end is adapted to be subjected to the air pressure in the space between the liquid surface and the valve, and which at the other end is adapted to exert a force seeking to open the valve, is characterized by the provision of a control valve at said one end of the channel, and that the control valve has an actuating member which follows the movements of the float, whereas a valve member of the valve is adapted to have a certain backlash with respect to the float movement, so that the control valve is opened before the valve when the float is descending.

A great advantage obtained with this new solution consists therein that the pressure difference across the venting valve can give a useful contribution to keeping the same closed when it is desired that the valve shall be closed.

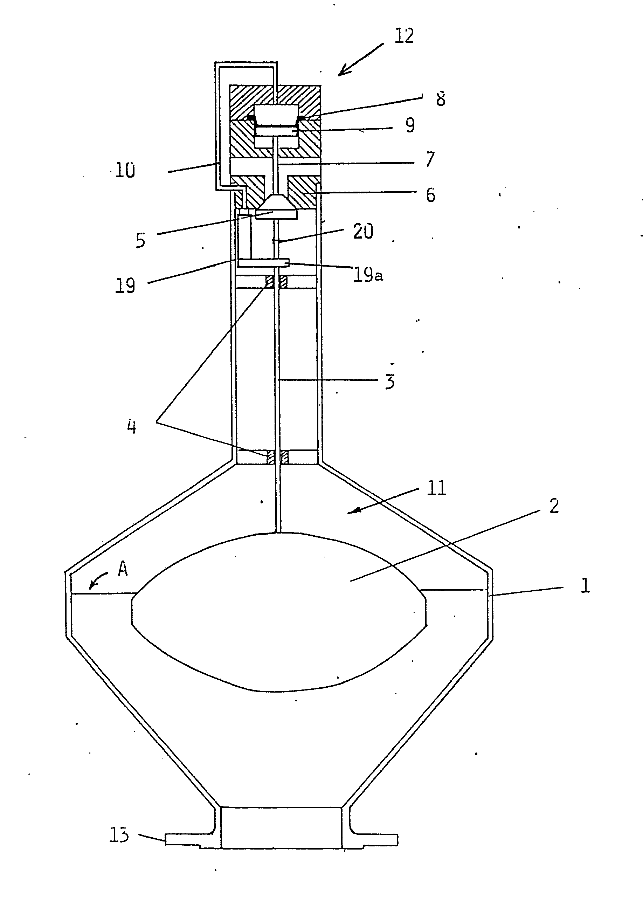

The invention shall be explained more closely in the following with reference to the drawing, which shows a schematic vertical section through a venting valve according to the invention.

The drawing shows a valve housing the main part 1 of which accommodates a float 2 which is here shown in a position lifted by a liquid the surface of which is designated A. At its lower end the valve housing 1 is provided with a flange 13 for connection to a liquid conduit, for example a sewer.

On the top of the housing 1 there is an extension in the form of an upper part 12 which may be tubular and which through a conical part is connected to the widest part of the housing 1 at the level of the normal operating level of the float 2.

Through a push rod 3 which runs in guides 4 the float is
connected to a valve member 5 which in co-operation with a
valve seat 6 forms the actual valve for the escape of air from
the space 11 which is bounded downwardly by the liquid surface
A and the float 2.

In addition to valve 5,6 there is provided a control valve
19 which is actuated by an arm 19a on push rod 3.  The push rod
3 is divided at a point 20 between the arm 19a and valve member
5, in such a way that there will be a certain backlash  between
the control valve 19 and venting valve 5,6.  From the closed
position of both valves as shown in the drawing, when the float
2 is descending, the control valve 19 will first be opened, and
then - when the maximum backlash  movement at 20 has taken place
- also valve member 5 will be moved away from its seat 6.

Control valve 19 is adapted to transfer the pressure in
air space 11 to a channel 10 for actuating a movable member
in the form of a piston 9 which may possibly be provided with
a sealing membrane, at the other end of channel 10.  Through
an upper push rod 7 the piston 9 is directly connected to valve
member 5.  This upper push rod 7 may constitute a direct extension of the upper part of push rod 3, namely the part being
above the telescopic part at 20.

It will be realised that with suitable dimensions of the
various cross-sectional or surface areas it will be possible
through channel 10 to obtain an equalisation of the pressure
in the air space 11 so that a corresponding force will act
from above against valve 5,6 and seek to open the same.  This
force shall ensure that the valve is opened under pressure,
i.e. that the pressure difference between the ambient atmosphere and the air space inside the valve does not keep the valve
closed when the liquid level sinks while the pressure in the
conduit is maintained.

On the other hand, the control valve 19 in its closed
position as shown in the drawing, will have for effect that a
possible elevated pressure in the air space 11 contributes to
retaining valve member 5 against its seat 6, so that tightness
thereof is better secured when the liquid level A is so high
that the float 2 seeks to close valve 5,6.

More specifically the relationships discussed above may be expressed mathematically as follows:   The force acting upwardly on the underside of valve 5,6 is:

$$F_1 = P_1 \times a_1$$

where     $P_1$ = the pressure in the conduit and

$a_1$ = the flow cross-section of the valve or in other words, the cross-section of the venting aperture.

The force acting downwardly because of the float with associated structural parts, may be expressed as the volume of the float multiplied by the specific gravity of the float.

Since the specific gravity must be lower than 1 in order that the float shall be floating in water, the area $a_1$ must be small so as to secure the opening of the valve under pressure. This is the more true when taking into account that the specific gravity of the float should preferably be substantially lower than 1 in order to give a good sealing.  In practice this is very inconvenient and the present solution with a closed pressure transfer system or channel 10 leads to substantial advantages, as already mentioned above.

In order to further reduce the risk of clogging because of polluting liquid the venting valve is provided with a float housing 1 the upper part 12 of which is much extended outwardly so that it has a larger length than what is necessary for accommodating valve 5,6 and the structure at the other or upper end of channel 10.  In addition to removing these parts and also the control valve 19 at the lower end of channel 10, from the liquid surface A, this design with a small cross-section in the upper part 12 combined with the comparatively strong widening of the float housing 1 in the region at the level of float 2, will have an advantageous effect on the pressure relationships. Thereby a slow rising rate of the liquid surface A is secured, with simultaneous compression of the air in space 11 above this liquid surface so that this further contributes to keeping the liquid surface at a distance from valve 5,6.  As a whole this arrangement of the structure will to a high extent contribute to preventing polluting liquid or the sewage content  in the valve housing under normal conditions, from reaching so high up into the tower-like upper part 12 that pollution or clogging of valve 5,6 and possibly the control valve 19 at the lower end of channel 10, may cause malfunctioning.

It is obvious that the embodiment described may be modified in various ways without departing from the fundamental solution according to the invention. Thus, the mechanical coupling or transmission of forces between the various active elements, such as the float 2, the valve member 5 and the piston 9, may be effected by means of other forms of mechanical coupling than the through-running push rod 3,7 as described. Nor is it absolutely necessary that the design is based upon an arrangement of the elements directly in vertical alignment above each other, but this must be regarded as preferable in practice. Moreover, it is obvious that the preferred, somewhat flat shape of the float 2 as shown, is not the only possible shape, as also a common spherical float may be used.

Finally, the backlash described above may be obtained in other ways than by dividing the push rod 3 into two mutually telescoping parts, namely by arranging for the valve member 5 to be displaceable a short distance between two stops on the push rod 3, which in this case may be in one piece and through-running, as mentioned above.

CLAIMS:

1. Venting valve for water, sewage and the like under pressure, comprising a housing (1) with a float (2) adapted to be lifted by the water, sewage or the like, and a valve (5, 6) for the escape of air, and adapted to be closed in response to movement of the float to an upper position, and a pressure channel (10) which at one end is adapted to be subjected to the air pressure in the space (11) between the liquid surface (A) and the valve (5, 6), and which at the other end (9) is adapted to exert a force seeking to open the valve (5, 6), characterised by the provision of a control valve (19) at said one end of the channel (10), and that the control valve (19) has an actuating member (19a) which follows the movements of the float (2), whereas a valve member (5) of the valve (5, 6) is adapted to have a certain backlash (20) with respect to the float movement, so that the control valve (19) is opened before the valve (5, 6) when the float (2) is descending.

2. Venting valve according to claim 1, in which the float (2) actuates the valve member (5) and the control valve (19) through the intermediary of a push rod (3), characterised in that the push rod (3) between the actuating member (19a) and the valve member (5) is divided into two parts which have a certain mutual backlash or telescopic movement.

3. Venting valve according to claim 1 in which the float (2) actuates the valve member (5) and the control valve (19) through the intermediary of a push rod (3), characterised in that the valve member (5) is slideable between two stops on the push rod (3).

Fig. 1

| Category | Citation of document with indication, where appropriate, of relevant passages | Relevant to claim |
|---|---|---|
| D,A | DE - A1 - 3 000 283 (TA-ESCO A/S) <br> * Page 5, lines 10-35; pages 6,7; fig. * | 1,3 |
| A | US - A - 3 834 415 (HERRON) <br> * Column 2, lines 10-34; fig. 2 * | 1 |
| A | US - A - 3 850 198 (BRAUKMANN) <br> * Fig. 1 * | 1 |

## DOCUMENTS CONSIDERED TO BE RELEVANT

**CLASSIFICATION OF THE APPLICATION (Int. Cl. 3)**

F 16 K 24/04

**TECHNICAL FIELDS SEARCHED (Int.Cl.3)**

F 16 K 24/00

F 16 K 31/00

F 16 K 33/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family,

corresponding document

X The present search report has been drawn up for all claims

| Place of search | Date of completion of the search | Examiner |
|---|---|---|
| VIENNA | 13-04-1982 | ROUSSARIAN |